# EUROPEAN PATENT SPECIFICATION

(11) **EP 0 699 170 B1**
(45) Date of publication and mention of the grant of the patent: **12.08.1998**
(21) Application number: 94930850.6
(22) Date of filing: 17.05.1994
(51) Int. Cl.: C01B 21/20, C25B 1/00

(54) **SOLVENT TRANSFER PROCESS FOR DINITROGEN PENTOXIDE**
VERFAHREN ZUR LÖSUNGSMITTELEXTRAKTION VON DISTICKSTOFFPENTOXID
PROCEDE DE TRANSFERT PAR SOLVANT DE PENTOXYDE D'AZOTE

(30) Priority: 18.05.1993 GB 9310251
(43) Date of publication of application: 06.03.1996
(73) Proprietor: THE SECRETARY OF STATE FOR DEFENCE, Farnborough, Hampshire GU14 OLX (GB)
(72) Inventor: SWINTON, Peter Francis, ICI Expl. Group, Stevenson, Ayrshire KA20 3LN (GB); RODGERS, Michael John, ICI Expl.Group, Stevenson, Ayrshire KA20 3LN (GB); BAGG, Greville Euan Gordon, Intel. Prop.Dpt, Hampshire GU14 6TD (GB); ARBER, Anthony William, Intel.Prop. Dpt., Hampshire, GU14 6TD (GB)
(74) Representative: Ede, Eric
(86) International application number: GB9401054
(87) International publication number: WO9426658

(56) References cited:
- WO-A-91/07524
- WO-A-92/02451
- CHEMICAL ABSTRACTS, vol. 106, no. 16, 20 April 1987, Columbus, OH (US); A.A. CHICHIROV et al., p. 155, AN 122387j
- CHEMICAL ABSTRACTS, vol. 101, no. 6, 06 August 1984, Columbus, OH (US); YU.M. KARGIN et al., p. 119, AN 40593

## Description

This invention relates tc a process for the recovery of dinitrogen pentoxide, N₂O₅ from an anolyte loop of an electrochemical cell into an alternative solvent system.

It is known to produce N₂O₅ by an electrochemical process. Such a process is described in GB Patent No. 2 245 003 in the name of one of the co-applicants.

Overall, such a process involves the conversion of HNO₃ to N₂O₅ and water, with N₂O₄ playing a role in the electrochemical reactions. The product is N₂O₅ in solution in HNO₃ with a small amount of N₂O₄ impurity. The concentration of N₂O₅ in this product is typically around 32 wt.% which is close to the saturation point for this solute/solvent system.

The importance of N₂O₅ has recently increased due to its application in the synthesis of energetic compounds, and particularly energetic polymers such as poly(3-nitratomethyl-3-methyloxetane) (polyNIMMO) or Poly glycidyl nitrate (PolyGLYN).

For use in organic nitration processes it is desirable that the N₂O₅ should be available in an inert organic solvent, such as dichloromethane. This could be achieved by solvent extraction from an HNO₃ solution. However such a process would be prohibitively costly to construct and operate, requiring substantial fixed plant. There would also be a likelihood of back-contamination of any electrolytic circuit by the organic solvent through recycling of the HNO₃.

It is known from USSR Inventor's Certificate SU-1089047A that solid N₂O₅ can be separated from strong 35-40 wt.% solutions of N₂O₅ in nitric acid by the addition of moderate amounts of N₂O₄ at a temperature of -5 to 0°C.

This results in precipitation of N₂O₅ contaminated with considerable amounts of HNO₃ from the solution. The presence of HNO₃ in this solid N₂O₅ makes it unsuitable for use in specific organic nitration procedures involving acid sensitive substrates. Relatively pure N₂O₅ can be obtained from this solid material by low pressure sublimation and subsequent condensation onto a cold surface. The overall procedure, however, then becomes lengthy and cumbersome and as such not suited to an industrial process. Moreover, this method of N₂O₅ production requires a starting solution of N₂O₅ in HNO₃ which is electrochemically less efficient and more costly to produce because of the very low proportion of N₂O₄ which it must contain.

In UK Patent No. 2 245 266 in the name of one of the co-applicants, there is disclosed a method of N₂O₅ separation, wherein a solution of N₂O₅ in HNO₃ at a temperature of at least 10°C (and containing at least 45 weight percent of dissolved N₂O₄ and N₂O₅ and further having a dissolved N₂O₅: HNO₃ ratio by weight of at least 1:3) is cooled to less than 8°C until an N₂O₅ solvate precipitates from the solution. The disclosure teaches that formation of a separate liquid N₂O₄ Phase is to be avoided since this reduces the yield of N₂O₅ solvate, with a proportion of the N₂O₅ instead entering the liquid N₂O₄ phase. This is particularly true for temperatures below about O to -5°C, at which the N₂O₄ tends more readily to form a separate liquid phase.

It has been found that if the N₂O₅/HNO₃ mixture obtained from the electrochemical process for producing N₂O₅ is maintained at or near saturation with N₂O₄ and then cooled, phase separation takes place in which N₂O₄ is the principal solvent of one phase and HNO₃ the principal solvent of the other phase. N₂O₅ is present within, and in equilibrium between, the two phases. The two phases may be readily separated and the N₂O₅ in the N₂O₄ phase can be efficiently extracted therefrom. The N₂O₅ extracted from the N₂O₄ phase can then be taken up into a suitable organic solvent either directly by extraction or by dissolution following isolation of solid N₂O₅". It has been found that N₂O₅ can be produced in an organic solvent in a more pure form than has previously been achieved through extraction from a (mainly) nitric acid solution as described above.

Further, it has been found that by using only a small proportion of the recirculating anolyte stream of the electrochemical process, N₂O₅ can be effectively stripped out of the mixture on a continuous basis without disrupting the steady state operation of the electrochemical process.

Accordingly, the present invention provides a process for producing a solution of N₂O₅ in an organic solvent, comprising the steps of:

passing anolyte and catholye streams of N₂O₄ in HNO₃ through respective anode and cathode compartments of an electrochemical cell whilst applying a potential difference between an anode and a cathode thereof, whereby electrical current is passed through the cell and N₂O₅ is electrochemically formed in the anode compartment, characterised by the further steps of:
dividing off a portion of the anolyte stream and, by either or both steps of cooling or addition thereto of N₂O₄ with thorough mixing, causing the divided portion to separate to produce a first N₂O₄ solvent phase containing N₂O₅ and a second HNO₃ solvent phase also containing N₂O₅;
separating the two phases in a separator; and
recovering N₂O₅ from the first N₂O₄ phase into an organic solvent, to produce a solution of N₂O₅ therein; and wherein the concentration of N₂O₄ in the analyte stream is maintained at at least 20 weight %.

The electrolytic process should preferably be operated at a maximum possible temperature which is consistent with the need to avoid decomposition of the materials involved.

An exit temperature for the anolyte stream in the range of 0 - 30°C is preferable, more preferably in the range 15 - 25°C. By this means it may be sought to optimise the efficiency of the overall process of the invention since the higher the temperature of the starting solution, that is the anolyte stream, the greater can be the quantity of N₂O₅ and N₂O₄ dissolved and therefore the greater will be the quantity of N₂O₅ in the final separated N₂O₄ Phase and so available for crystallisation.

Preferably, the electrochemical process should operate with the anolyte stream close to saturation with respect to N₂O₄, the concentration of N₂O₄ being at least 20 wt%, and preferably, at least 30 wt% of the anolyte stream.

The divided portion of the anolyte stream is caused to separate into two phases either by cooling or by addition thereto of N₂O₄ such that the divided portion becomes over saturated with respect to N₂O₄. Addition of further N₂O₄ in this way also has the advantage of increasing the volume of the separated N₂O₄ layer and hence the amount of N₂O₅ which may be removed from the system as product.

The added N₂O₄ may consist of fresh liquid N₂O₄ recovered/recycled N₂O₄ from a previous recovery processs, or a combination of both.

Alternatively, a combination of addition of N₂O₄ with cooling may be used to cause two liquid phases to form. In this case it is preferred to add N₂O₄ to the divided portion of the anolyte stream before the portion passes to the separator in order to ensure that the portion is saturated with N₂O₄ prior to cooling.

Preferably the process further comprises cooling the divided portion subsequent to its saturation with N₂O₄ .

It is worth noting that use of such essentially simple variables to control the process of the present invention emphasises the advantage of the present process over more elaborate counter-current type extraction processes.

Where two phases are produced simply by cooling the divided portion of the anolyte stream, because partitioning of the N₂O₅ is taking place from an homogeneous solution, the proportion of N₂O₅ in the two phases is instantaneously in the equilibrium proportion making the partition more efficient than that of simple solvent extraction where mass transfer considerations must be taken into account. Even where excess N₂O₄ is added to the divided portion of the anolyte stream (and either with or without subsequent cooling), such that the partition which occurs is not strictly under equilibrium conditions, in practice the results are essentially very similar, provided the addition takes place with efficient mixing. It is necessary that where the divided portion is to be cooled, it should have been thoroughly mixed beforehand.

Where the divided portion is cooled, this should be to a temperature of around -5 to + 15°C.

Further, the process should preferably operate with the anolyte stream close to saturation with respect to N₂O₅ compatible with the avoidance of crystallization of N₂O₅ in the anolyte stream. Typically, the concentration of N₂O₅ will be at least 15 wt% and preferably at least 20 wt%.

The electrochemical cell preferably employs a cationic exchange membrane (such as that described in UK Patent No. 2 245 003 in the name of one of the co-applIcants) , so that increases in the mass of HNO₃ in the anolyte stream by intra-cell transfer from the catholye is avoided. Use of an anionic membrane would allow HNO₃ to pass through from catholyte to anolyte such as to effectively render continuous operation of the electrochemical and phase separation processes uneconomic.

Preferably the divided portion of the anolyte stream is a minor portion thereof. This allows the cell and process to be operated continuously. The portion of the anolyte stream divided off is advantageously such that, under the conditions of transfer of N₂O₅ which exist downstream, the amount of transferred N₂O₅ will substantially equal the amount of N₂O₅ being generated in the cell. In this way the cell, and hence the process, may be operated in a steady state manner.

Preferably the divided portion is approximately 1 wt% to 20 wt% of the anolyte stream, and more preferably approximately 5 wt% thereof.

Recovery of N₂O₅ from the N₂O₄ Phase may be accomplished in a number of ways, for example, abstraction (extraction) or distillation (evaporation). Possible recovery methods include:
chilling the N₂O₄ phase to induce crystallization either in bulk or on a cold surface and then respectively filtering off the solid or draining the liquid phase from the surface, followed by re-dissolving the solid N₂O₅ in an organic solvent; or
applying reduced pressure to the N₂O₄ phase to cause the solvent N₂O₄ to be distilled off and re-dissolving the N₂O₅ produced in an organic solvent; or
feeding the N₂O₄ phase directly into an organic solvent and subjecting the mixture to fractional distillation at reduced pressure to remove the volatile N₂O₄, leaving a solution of N₂O₅ in the organic solvent.

Any residual N₂O₄ in the organic solvent solution of N₂O₅ can readily be converted to N₂O₅ by treating the solution with ozone.

Conveniently the N₂O₅ solution could be stored for further use under an ozone containing atmosphere or at a reduced temperature as a result of the tendency of N₂O₅ to degrade over time.

The preferred organic solvent for use in the process of the present invention is dichloromethane but other suitable inert organic solvents such as halon (CFC) substitutes or acetonitrile may be used instead.

Effluent N₂O₄ (containing residual N₂O₅ in solution remaining after recovery of N₂O₅ may be recycled to the anolyte stream to maintain a high level of N₂O₄ therein especially if not prejudicially contaminated by organic compounds. At least some effluent N₂O₄ may, however, be added to the divided portion of the anolyte stream, as described previously.

The overall process may therefore be operated such that there is substantially no output N₂O₄ waste such as to contribute an effluent stream requiring costly recovery processes.

The separated HNO₃ solvent phase may also be returned to the anolyte stream. This substantially does away with any HNO₃ waste effluent stream and any associated necessity for recovery.

N₂O₅ may then be obtained from the separated N₂O₄ phase by further cooling whereupon substantially pure N₂O₅ crystallises out of solution. In consequence of the high thermal solubility gradient found where N₂O₄ is the effective solvent, the proportion of N₂O₅ which may be recovered in a substantially pure form is high. This may then be separated off from the residual N₂O₄ mother liquor and dissolved in a suitable organic solvent. In this manner solutions of N₂O₅ in organic solvents may be obtained which are substantially purer in terms of contaminants than those which can be obtained by either direct dissolution of the N₂O₅ generated by the Russian process described above or by direct extraction from N₂O₅ /HNO₃ mixtures.

According to a third aspect of the present invention there is provided apparatus for use in a process for producing a solution of N₂O₅ in an organic solvent comprising:
an electrochemical cell providing respective anode and cathode compartments having a respective anode and cathode, the compartments being capable of having respective first, anolyte and second, catholyte, streams of N₂O₄ in HNO₃ passed therethrough, said cell further having means for applying a potential difference between the anode and the cathode whereby, in use, an electric current passes through the cell and N₂O₅ is formed electrochemically in the anode compartment, characterised in that the apparatus further comprises:
means for dividing off a portion of the anolyte stream and means for cooling the divided portion to produce a first N₂O₄ solvent phase contaning N₂O₅ and a second HNO₃ solvent phase;
a separator for separating the two phases; and
means for recovering N₂O₅ from the first N₂O₄ Phase into an organic solvent to produce a solution of N₂O₅ therein.

Advantageously, the apparatus further comprises means for injecting a stream of N₂O₄ into the divided portion prior to cooling the said portion. In a yet further aspect, the cooling means may be omitted and the apparatus comprise only means for injecting a stream of N₂O₄ into the divided portion so as to produce a first N₂O₄ solvent phase containing N₂O₅ and a second HNO₃ solvent phase.

In general, it will be appreciated that a substantial range of variation in the degree of N₂O₅ partition between the two phases may be obtained by addition of a requisite quantity of liquid N₂O₄ accompanied by efficient mixing and either with or without subsequent cooling.

The present invention will now be described by way of example only, with reference to the accompanying drawings in which:
Figure 1 is an outline phase diagram of the HNO₃-N₂O₄-N₂O₅ system;
Figure 2 is a schematic process flow diagram of an embodiment of the method of the present invention, and
Figure 3 is a simplified outline phase diagram derived from Figure 1 but showing additionally a typical operation according to the embodiment of the method of the present invention of Fig 2.

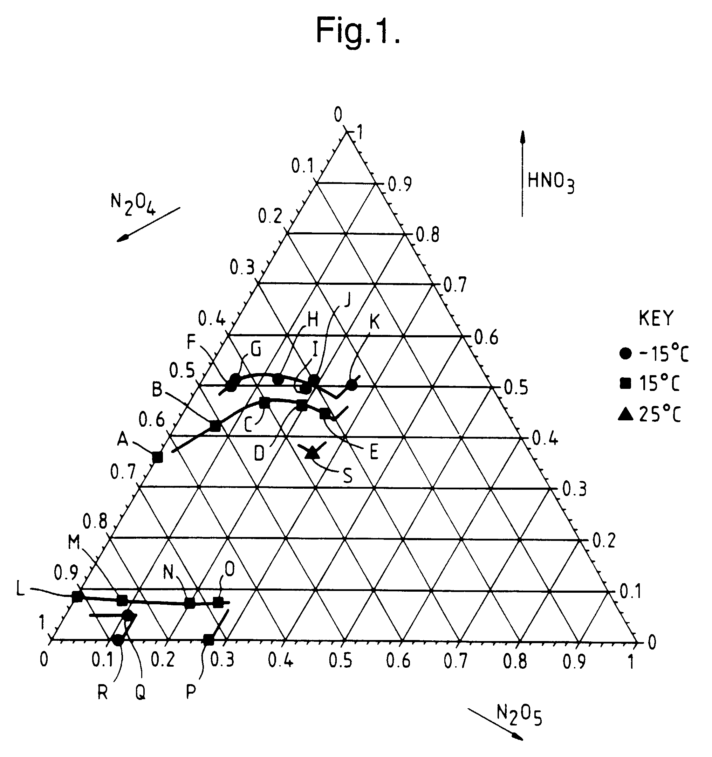

A series of experiments were conducted to establish the phase diagram illustrated in Figure 1.

### Experiment 1

N₂O₄ was added to HNO₃ progressively and with thorough mixing at a temperature of 15°C until the solution became hazy, indicating incipient phase separation. The proportions of the two ingredients at this point are recorded in Table 1.

### Experiments 2 to 5

Four solutions of N₂O₅ in HNO₃ were prepared gravimetrically to different strengths at 15°C and N₂O₄ was then added progressively with thorough mixing until the solutions became hazy, indicating incipient phase separation (whether liquidus, as in nearly all cases, or solidus). The proportions of the three ingredients at this point are recorded for each run in Table 1.

### Experiments 6 to 11

The experimental procedure of Experiments 2 to 5 was repeated with a further six solutions but at a temperature of -15°C. The resulting data are again set out in Table 1.

### Experiment 12

The experimental procedure of Experiment 1 was repeated except that in this case HNO₃ was added to N₂O₄ until the solution became hazy. The concentrations of the two species at this point are given in Table 1.

### Experiments 13 to 16

Four solutions of N₂O₅ in N₂O₄ were prepared gravimetrically to different strengths at a temperature of 15°C and HNO₃ was then added to each solution progressively until the solutions became hazy indicating incipient phase separation. The relative proportions of the three ingredients at this point are recorded for each of the solutions in Table 1.

### Experiments 17 and 18

The experimental procedure of Experiments 13 to 16 was repeated with a further two solutions of N₂O₅ in N₂O₄ but at a temperature of -15°C. The proportions at the point of incipient phase separation for each of the solutions are set out in Table 1.

**TABLE 1**

| Expt | Temperature | wt% N₂O₅ in solution | wt% HNO₃ in solution | wt% N₂O₄ in solution |
|---|---|---|---|---|
| 1 | +15°C | 0 | 36 | 64 |
| 2 | " | 7 | 42 | 51 |
| 3 | " | 13 | 47 | 40 |
| 4 | " | 20 | 47 | 33 |
| 5 | " | 24 | 45 | 31 |
| 6 | -15°c | 6 | 50 | 44 |
| 7 | " | 6 | 51 | 43 |
| 8 | " | 13 | 51 | 36 |
| 9 | " | 18 | 50 | 32 |
| 10 | " | 19 | 51 | 30 |
| 11 | " | 26 | 50 | 24 |
| 12 | +15°C | 0 | 8 | 92 |
| 13 | " | 8 | 8 | 84 |
| 14 | " | 20 | 7 | 73 |
| 15 | " | 25 | 7 | 68 |
| 16 | " | 27 | 0 | 73 |
| 17 | -15°C | 11 | 5 | 84 |
| 18 | " | 12 | 0 | 88 |

### Summary of Experiments

The results of Experiments 1 to 18 are shown plotted on the phase diagram of Figure 1. The data points are respectively designated as points A to R. Additional point S which is known to represent the meeting point of the solidus and liquidus lines at 25°C is taken from the phase diagram which is Figure 1 of UK Patent No. 2 245 266 in the name of one of the co-applicants.

It will be seen from the phase diagram of Figure 1 that two liquid phases can occur, and can be in equilibrium with each other and with a solid N₂O₅ phase. For compositions with a high proportion of HNO₃, represented by the region towards the top of graph of Figure 1, a dense single liquid phase exists with HNO₃ as the major solvent and this conveniently forms the anolyte for the described process. As the N₂O₄ component increases, a liquidus curve is reached which represents the saturation of the minor solvent (N₂O₄). Beyond this curve a lighter second liquid phase is formed with N₂O₄ as the major solvent. This phase is in equilibrium with the heavier HNO₃ phase and is represented by the region towards the lowere left hand portion of the graph. Thus the data points A to E lie on the liquidus curve for +15°C and represent the maximum concentration of N₂O₄ in the acid phase at that temperature and for different N₂O₅ concentrations. Beyond point E the liquidus curve intersects with a solidus curve where solvate N₂O₅ crystallises out.

Likewise, data points F to J lie on the liquidus curve for -15°C, with point K lying on the solidus at that temperature such that the intersection of the two curves lies in the region between points J and K. Data point S represents the actual intersection of liquidus and solidus at a temperature of +25°C.

It will be appreciated that the preferred composition for the anolyte in the process of the present invention lies between the curves for +25°C and -15°C and preferably close to the +15°C curves near to the point cf intersection, since this area provides the maximum concentrations of both N₂O₄ and N₂O₅ that can exist in the anolyte before crystallisation or liquid phase separation. In practice the optimum anolyte composition will lie above the saturation curves for the temperature of operation in order to maintain a safety factor to prevent crystallisation of N₂O₅ occuring on cooling surfaces or premature liquid phase separation.

A second liquid phase can also co-exist with the HNO₃ phase, and is shown by the region in the lower left portion of the phase diagram beyond the curves defined by data points M to 0, these representing the approximate position of the saturation (liquidus) curve at +15°C.

This liquidus intersects with the solidus arc beyond point 0 and point P lies on the solidus and represents the saturation limit for N₂O₅ in N₂O₄ at +15°C. A similar intersection of the liquidus and the solidus curves occurs beyond point Q for -15°C with point R in this case illustrating the saturation of N₂O₅ in N₂O₄ at that temperature.

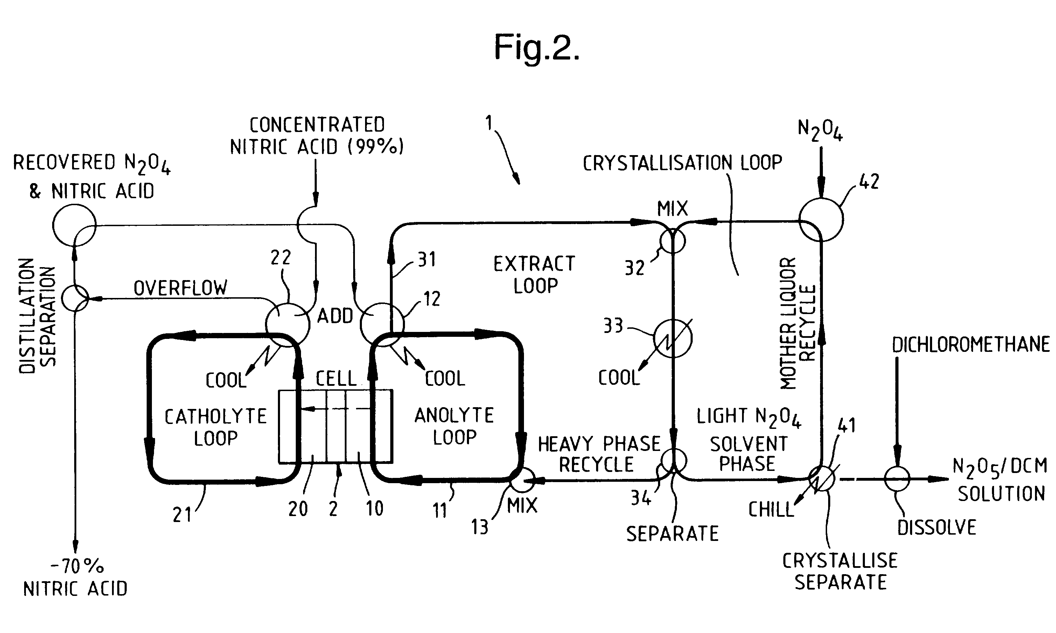

Referring now to Figure 2 of the drawings, apparatus, generally designated 1, for use in a process for producing a solution of N₂O₅ in an organic solvent comprises an electrochemical cell 2 providing respective anode and cathode compartments 10, 20 having a respective anode and cathode (not shown).

The anode compartment 10 forms part of an anolyte loop 11 having an anolyte storage compartment 12 containing N₂O₅/HNO₃/N₂O₄. The anode compartment 10 is capable of having a first, anolyte stream of N₂O₅/HNO₃/N₂O₄ passed therethrough from the anolyte storage compartment 12 via the anolyte loop 11.

The cathode compartment 20 forms part of a catholyte loop 21 having a catholyte storage compartment 22 containing N₂O₄/HNO₃/water. The cathode compartment 20 is capable of having a second, catholyte stream of N₂O₄/HNO₃/water passed therethrough from the catholyte compartment 22 via the catholyte loop 21.

An explanation of the functioning of such electrochemical cells can be found in UK Patent No. 2 245 003. Essentially, a first, anolyte stream of N₂O₅/HNO₃/N₂O₄ is passed through the anode compartment 10, and a second, catholyte stream of water/HNO₃/N₂O₄ passed through the cathode compartment 20 whilst applying a potential difference between the anode and the cathode.

In this way electrical current is passed through the cell 2 and N₂O₅ electrochemically formed in the anode compartment 10.

It is envisaged that, in use, the catholyte loop 21, would initially contain concentrated (typically 98%) HNO₃ but would build up a considerable concentration of water and N₂O₄ during the electrolysis. During operation of the process small quantities of the catholyte stream would be removed in a continuous manner and the catholyte stream replenished with fresh HNO₃. The material removed would be treated to remove water as dilute HNO₃ residual substantially water-free HNO₃ and N₂O₄ being recycled.

The anolyte loop 11 contains the anolyte, which would initially be N₂O₄ in HNO₃ but would build up to a steady state (under extraction conditions) containing at least 15% and 20% respectively of N₂O₅ and N₂O₄ (by weight), during electrolysis depending on the temperature of the anolyte.

It is further envisaged that the electrochemical cell 2 would employ a cationic exchange membrane such as NAFION 324 or NAFION 350 which are proprietary materials manufactured by Messrs DuPont de Nemours. In the present process, the concentration of N₂O₄ in the anolyte is greater than 20% w/w so that a cation exchange membrane can be used without incurring an unacceptably low efficiency.

The apparatus further provides means by which a minor portion (say between 1% and 20%) of the N₂O₅/HNO₃/N₂O₄ anolyte stream can be divided off from the rest of the anolyte stream: the divided portion is shown as 31 on Figure 1. By dividing off only a small proportion of the anolyte for further treatment, the main electrochemical process can be operated in a continous manner under constant steady state conditions and solute/solvent equilibrium can be maintained throughout. Moreover, by using a continuous separation process it is only necessary to remove a relatively small proportion of the solute, N₂O₅ and since phase separation into N₂O₄ and HNO₃ phases occurs under essentially equilibrium conditions elaborate countercurrent methods involving mass transfer of solute are not required. It will be appreciated then that the application of the continuous process of separation to the continuous output from the electrolytic process provides a highly economical procedure overall and one which is well suited to an industrial process.

The apparatus also provides a mixer 32 to which the minor portion is passed, and in which further N₂O₄ may be introduced into the minor portion. Thereafter the minor portion (with or without added N₂O₄) may be cooled to a temperature of around -5°C to + 15°C using the cooler 33.

The apparatus also provides a separator 34 to which the (optionally cooled) solution or mixture is then passed. The separator 34 allows the minor portion to separate into two parts, namely an upper N₂O₄ layer containing N₂O₅ and small amounts of HNO₃ and a lower HNO₃ layer containing both N₂O₅ and N₂O₄.

The separator 34 may additionally include cooling means whereby the minor portion may be maintained at the desired temperature so as to promote the formation or the upper and lower layers and take off means by which the upper and lower layers may be made remote from one another.

There is further provided abstracting means, in this embodiment, in the form of a crystalliser 41 to which the upper N₂O₄ layer is passed. In the crystalliser 41 the N₂O₄ layer is chilled to induce N₂O₅ precipitation. Because at lower temperatures the viscosity of the mixture becomes too high to allow satisfactory separation of the crystalline N₂O₅ from the liquor, a temperature of -15°C represents a practicable lower limit for operation of crystalliser 41.

The N₂O₅ crystals obtained from the crystalliser are only slightly contaminated with HNO₃ and N₂O₄ and can thence be removed and redissolved in a suitable organic solvent, such as dichloromethane.

The HNO₃ solvent phase produced by the separator 34 is recycled by return to the anolyte loop 11.

Further, effluent N₂O₄ remaining after abstraction of N₂O₅ from the N₂O₄ layer is recycled by feeding to an N₂O₄ storage tank 42, from which tank 42 the divided portion 31 may be injected with N₂O₄ in the mixer 32 in an amount sufficient to saturate the portion prior to separation thereof in the separator 34, as previously explained.

Such recycling of what would otherwise be classed as waste streams obviates the need to dispose of such, and provides an associated cost advantage.

The particular advantage of the process described herewith may be said to depend on the fact that the HNO₃ phase has a high temperature solubility coefficient with respect to N₂O₄ but a lower coefficient with respect to N₂O₅ which permits a rapid separation of the liquid phases without crystallization of solid N₂O₅ when there is a small reduction in temperature of the mixture and that the N₂O₄ phase has both a low content and low coefficient of solubility of HNO₃ but a high coefficient in respect of N₂O₅ thus permitting the rapid and easy formation of relatively pure N₂O₅ crystals on reducing the temperature of this phase. Hence a two stage reduction in temperature with an intermediate phase separation stage will effect transfer of the N₂O₅ from a saturated single phase three component mixture into a solution in N₂O₄ from which it is readily crystallizable in an essentially pure form which is suitable for re-solution in a suitable organic solvent.

Operation of the process of this present invention may now be exemplified in the following manner.

### Example 1

Based on a process of operating an electrochemical cell to generate N₂O₅ in a mixture of N₂O₄ and HNO₃ in accordance with known procedures (see UK Patent No. 2 245 003), synthetic mixtures of all three components were prepared and mixed thoroughly before being each allowed to separate into two layers which were then isolated. The synthetic mixtures each replicated a product of such an electrochemical cell to which N₂O₄ had been added and which had been cooled to a temperature of 15°C. After separation, samples of each layer were analysed to provide the composition of the upper and lower phases. The results are given in Table 2.

**TABLE 2**

| %w/w in mixture | | | %w/w in upper layer | | | %w/w in lower layer | | |
|---|---|---|---|---|---|---|---|---|
| N₂O₄ | N₂O₅ | HNO₃ | N₂O₄ | N₂O₅ | HNO₃ | N₂O₄ | N₂O₅ | HNO₃ |
| 47 | 19 | 34 | 75 | 17 | 8 | 36 | 20 | 44 |
| 46 | 22 | 32 | 71 | 20 | 9 | 30 | 23 | 47 |

### Example 2

A synthetic mixture with a composition corresponding approximately to that of the upper layers obtained in Example 1 was prepared gravimetrically. The mixture was then chilled to yield crystals which were filtered off and washed with cold dichloromethane. Analyses of the original synthetic mixture and of the crystalline product obtained before and after washing are given in Table 3.

**TABLE 3**

| %w/w original mixture | | | %w/w wet crystals | | | %w/w washed crystals | | |
|---|---|---|---|---|---|---|---|---|
| N₂O₄ | N₂O₅ | HNO₃ | N₂O₄ | N₂O₅ | HNO₃ | N₂O₄ | N₂O₅ | HNO₃ |
| 68 | 28 | 4 | 8 | 87 | 5 | 0 | 100 | 0 |

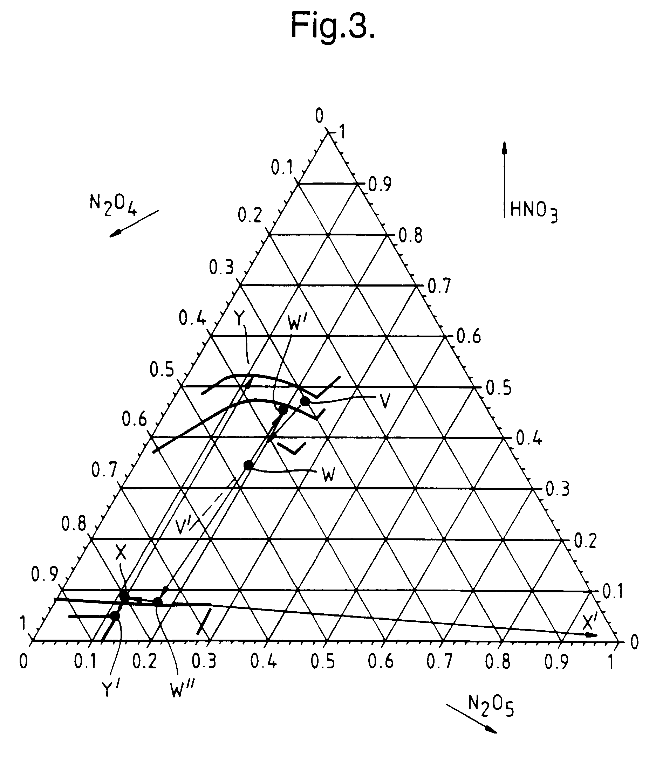

The processes described in Examples 1 and 2 and in relation to the process flow diagram of Figure 2 may now be further explained with reference to Figure 3 which shows a simplified representation of the phase diagram of Figure 1 with the solid and liquidi of that diagram only drawn in. In addition, the phase diagram of Figure 3 shows certain tie lines which connect the compositions cf two liquid phases co-existing in equilibrium. Such liquid phases in equilibrium are possible where the respective compositions at a given temperature each lie on one of the two liquidi for that temperature.

For example, data points A and L on the left hand axis of the diagram of Figure 1 represent two ccmpositions which are in equilibrium and which are connected by a tie line lying along the left hand axis. Moving to compositions further to the right on each liquidus, those pairs cf compositions which are in equilibrium will be indicated by tie lines which lie broadly parallel to the left hand axis, their exact disposition reflecting the preferential uptake of the solute N₂O₅ in one of the solvent phases.

Point V represents a typical anolyte composition fcr operation of an electrochemical cell at +15°C, ie with ca. 30 wt% N₂O₄ and ca. 23 wt% N₂O₅. Injection into this composition of N₂O₄ (with efficient mixing) is represented by movement in the direction of the arrow along the line VV', the composition V' corresponding to the composition of the mother liquor which remains after ultimate crystallisation of N₂O₅ . Dependent on the respective quantities of added N₂O₄ and of the minor portion of the anolyte of composition V, the mixture may be said to reach a composition represented on the diagram of Figure 3 by point W. This, in the embodiment chosen, represents a composition with circa. 46 wt% N₂O₄ and circa. 19 wt% N₂O₅, that is, of roughly the same composition as the mixtures of Example 1.

Composition W is not a stable mixture and on being allowed to divide will form two phases or layers with compositions represented by respective points W' and W" lying on the two liquidi at either end of the tie line W'W". From this point the two layers are separated and the heavier acid layer represented by point W' is returned back to the anolyte loop (as previously described in connection with Figure 2), while the composition W", in which N₂O₄ is the solvent, is fed to the chiller and crystalliser. The compositions at W' and W" correspond approximately to those of the two layers produced in Example 1 (Table 2).

When the N₂O₄ solvent layer (W") is cooled, solid pure N₂O₅ crystallises out as indicated by line W"X'. As N₂O₅ crystallises out (ie a composition represented by X'), the remaining N₂O₄ layer becomes enriched with respect to N₂O₄ as represented by a composition at point X. This composition is again unstable and the result could be a further separation to compositions represented by points Y and Y'(shown this time as lying at either end of tie line YY' on the respective liquidi at -15°C, because of the cooling of the liquid). In practice any separate HNO₃ which may arise (ie. composition Y) will be entrained in the major N₂O₄ phase (composition Y') and will be returned to the earlier part of the process via the N₂O₄ storage tank 42 (Figure 2).

In summary, for a given anolyte composition V, the quantity of N₂O₅ extracted is controlled by the flow rate of the anolyte loop take-off, by the quantity of N₂O₄ liquor mixed with it, and by the relative temperatures of the separation stage and the crystalliser.

## Claims

1. A process for producing a solution of N₂O₅ in an organic solvent comprising the steps of:
passing anolyte and catholyte streams of N₂O₄ in HNO₃ through respective anode and cathode compartments (10, 20) of an electrochemical cell (2) whilst applying a potential difference between an anode and a cathode thereof, whereby electrical current is passed through the cell and N₂O₅ is electrochemically formed in the anode compartment, **characterised by** the further steps of:
dividing off a portion (31) of the anolyte stream and, by either or both steps of cooling or addition thereto of N₂O₄ with thorough mixing, causing the divided portion to separate to produce a first N₂O₄ solvent phase containing N₂O₅ and a second HNO₃ solvent phase also containing N₂O₅ ;
separating the two phases in a separator (31); and
recovering N₂O₅ from the first N₂O₄ phase into an organic solvent to produce a solution of N₂O₅ therein;
and wherein the concentration of N₂O₄ in the anolyte stream is maintained at at least 20 weight%.

2. A process according to claim 1, wherein after addition of N₂O₄ to the divided portion, the portion is cooled to a temperature of between -5 and +15°C.

3. A process according to claim 1 or claim 2, wherein the concentration of N₂O₄ in the anolyte stream is maintained at at least 30 wt%.

4. A process according to any of claims 1 to 3, wherein the concentration of N₂O₅ in the anolyte stream is maintained at at least 15 wt%.

5. A process according to claim 4, wherein the concentration is maintained at at least 20 wt%.

6. A process according to any one of the preceding claims, wherein the temperature of the anolyte stream exiting from the electrochemical cell is maintained in the range of 0 to 30°C.

7. A process according to any one of the preceding claims, wherein the portion of the anolyte stream which is divided off is a minor portion thereof.

8. A process according to claim 7, wherein the minor portion comprises from 1 to 20 wt% of the anolyte stream.

9. A process according to claim 8, wherein the minor portion comprises approximately 5 wt% of the anolyte stream.

10. A process according to any one of the preceding claims, wherein the N₂O₅ product is recovered from the first N₂O₄ phase by chilling the N₂O₄ phase to induce crystallization either in bulk or on a cold surface (41) and then respectively filtering off the solid or draining the liquid phase from the surface, followed by re-dissolving the solid N₂O₅ in an organic solvent.

11. A process according to any one of claims 1 to 9, wherein the N₂O₅ product is recovered from the first N₂O₄ phase by applying reduced pressure to the N₂O₄ phase to cause the solvent N₂O₄ to be distilled off and re-dissolving the N₂O₅ produced in an organic solvent.

12. A process according to any one of claims 1 to 9, wherein the N₂O₅ product is recovered from the first N₂O₄ phase by feeding the N₂O₄ phase directly into an organic solvent and subjecting the mixture to fractional distillation at reduced pressure to remove the volatile N₂O₄ leaving a solution of N₂O₅ in the organic solvent.

13. A process according to any one of the preceding claims, wherein the organic solvent is dichloromethane or acetonitrile.

14. Apparatus (1) for use in a process for producing a solution of N₂O₅ in an organic solvent, which apparatus comprises:
an electrochemical cell (2) providing respective anode and cathode compartments (10, 20) having a respective anode and cathode, the compartments being capable of having respective first, anolyte and second, catholyte, streams of N₂O₄ in HNO₃ passed therethrough, said cell further having means for applying a potential difference between the anode and the cathode whereby, in use, an electric current passes through the cell and N₂O₅ is formed electrochemically in the anode compartment, **characterised in that** the apparatus further comprises:
means for dividing off a portion (31) of the anolyte stream and means (33) for cooling the divided portion to product a first N₂O₄ solvent phase containing N₂O₅ and a second HNO₃ solvent phase;
a separator (34) for separating the two phases; and
means for recovering N₂O₅ from the first N₂O₄ phase into an organic solvent to product a solution of N₂O₅ therein.

15. Apparatus according to claim 14, further comprising means (32) for injecting a stream of N₂O₄ into the divided off portion of the anolyte stream prior to cooling the portion.

16. Apparatus according to claim 14 or 15, wherein effluent N₂O₄ remaining after recovery of N₂O₅ from the N₂O₄ phase is recycled to the anolyte stream of the electrochemical cell.

17. Apparatus according to claim 16, wherein at least a part of the effluent N₂O₄ is recycled to be injected into the divided portion of the anolyte stream.

18. Apparatus according to any of claims 14 to 17, wherein the separated HNO₃ solvent phase is returned to the anolyte stream of the electrochemical cell.

## Patentansprüche

1. Verfahren zur Herstellung einer Lösung von N₂O₅ in einem organischen Lösungsmittel, bei dem:
Anolyt- und Katholytströme von N₂O₄ in HNO₃ durch entsprechende Anoden- und Kathodenkompartimente (10, 20) einer elektrochemischen Zelle (2) geführt werden, während an deren Anode und Kathode eine Potentialdifferenz angelegt wird, wodurch elektrischer Strom durch die Zelle fließt und N₂O₅ im Anodenkompartiment elektrochemisch gebildet wird,
dadurch **gekennzeichnet,** daß
als weitere Schritte:
ein Teil (31) des Anolytstroms abgetrennt und durch Kühlen und/oder durch Zugabe von N₂O₄ unter gründlichem Durchmischen der abgetrennte Teil in eine erste N₂O₅ enthaltende N₂O₄ -Lösungsmittelphase und eine zweite ebenfalls N₂O₅ enthaltende HNO₃-Lösungsmittelphase aufgetrennt wird,
die zwei Phasen in einem Abscheider (31) getrennt werden und
N₂O₅ aus der ersten N₂O₄-Phase in ein organisches Lösungsmittel unter Bildung einer Lösung von N₂O₅ darin gewonnen wird,
wobei die Konzentration an N₂O₄ in dem Anolytstrom bei mindestens 20 Gew.-% gehalten wird.

2. Verfahren nach Anspruch 1, wobei nach der Zugabe von N₂O₄ zu dem abgetrennten Teil der Teil auf eine Temperatur zwischen -5 und +15°C gekühlt wird.

3. Verfahren nach Anspruch 1 oder 2, wobei die Konzentration an N₂O₄ in dem Anolytstrom bei mindestens 30 Gew.-% gehalten wird.

4. Verfahren nach einem der Ansprüche 1 bis 3, wobei die Konzentration an N₂O₅ in dem Anolytstrom bei mindestens 15 Gew.-% gehalten wird.

5. Verfahren nach Anspruch 4, wobei die Konzentration bei mindestens 20 Gew.-% gehalten wird.

6. Verfahren nach einem der vorhergehenden Ansprüche, wobei die Temperatur des die elektrochemische Zelle verlassenden Anolytstroms im Bereich von 0 bis 30°C gehalten wird.

7. Verfahren nach einem der vorhergehenden Ansprüche, wobei der Teil des Anolytstroms, der abgetrennt wird, ein kleinerer Teil davon ist.

8. Verfahren nach Anspruch 7, wobei der kleinere Teil 1 bis 20 Gew.-% des Anolytstroms ausmacht.

9. Verfahren nach Anspruch 8, wobei der kleinere Teil etwa 5 Gew.-% des Anolytstroms ausmacht.

10. Verfahren nach einem der vorhergehenden Ansprüche, wobei das N₂O₅-Produkt aus der ersten N₂O₄-Phase gewonnen wird, indem die N₂O₄-Phase zur Einleitung der Kristallisation aus der Lösung oder an einer kalten Oberfläche (41) gekühlt und dann entsprechend der Feststoff abfiltriert oder die flüssige Phase von der Oberfläche ablaufen gelassen und darauf das feste N₂O₅ wieder in einem organischen Lösungsmittel gelöst wird.

11. Verfahren nach einem der Ansprüche 1 bis 9, wobei das N₂O₅-Produkt aus der ersten N₂O₄-Phase durch Anlegen eines verringerten Druckes an die N₂O₄-Phase zum Abdestillieren des N₂O₄-Lösungsmittels gewonnen und das gebildete N₂O₅ wieder in einem organischen Lösungsmittel gelöst wird.

12. Verfahren nach einem der Ansprüche 1 bis 9, wobei das N₂O₅-Produkt aus der erste N₂O₄-Phase gewonnen wird, indem die N₂O₄-Phase direkt in ein organisches Lösungsmittel eingeführt und das Gemisch unter verringertem Druck zur Entfernung des flüchtigen N₂O₄ unter Rücklassung einer Lösung von N₂O₅ in dem organischen Lösungsmittel fraktioniert destilliert wird.

13. Verfahren nach einem der vorhergehenden Ansprüche, wobei das organische Lösungsmittel Dichlormethan oder Acetonitril ist.

14. Vorrichtung (1) zur Verwendung in einem Verfahren zur Herstellung einer Lösung von N₂O₅ in einem organischen Lösungsmittel, wobei die Vorrichtung aufweist: eine elektrochemische Zelle (2), die entsprechende Anoden- und Kathoden-Kompartimente (10, 20) mit entsprechender Anode und Kathode bereitstellt, wobei durch die Kompartimente entsprechende erste Anolyt- und zweite Katholytströme von N₂O₄ in HNO₃ geführt werden können und die Zelle ferner Einrichtungen zum Anlegen einer Potentialdifferenz an die Anode und die Kathode aufweist, wodurch beim Gebrauch ein elektrischer Strom durch die Zelle fließt und N₂O₅ elektrochemisch im Anodenkompartiment gebildet wird,
dadurch **gekennzeichnet**, daß
die Vorrichtung außerdem aufweist:
Einrichtungen zum Abtrennen eines Teils (31) des Anolytstroms und Einrichtungen (33) zum Kühlen des abgetrennten Teils zur Bildung einer ersten N₂O₅ enthaltenden N₂O₄ -Lösungsmittelphase und einer zweiten HNO₃-Lösungsmittelphase,
einen Abscheider (34) zum Trennen der zwei Phasen und
Einrichtungen zur Gewinnung von N₂O₅ aus der ersten N₂O₄-Phase in ein organisches Lösungsmittel zur Herstellung einer Lösung von N₂O₅ darin.

15. Vorrichtung nach Anspruch 14, die außerdem Einrichtungen (32) zum Einspritzen eines Stromes N₂O₄ in den aus dem Anolytstrom abgetrennten Teil vor dem Kühlen des Teils aufweist.

16. Vorrichtung nach Anspruch 14 oder 15, wobei der nach der Gewinnung von N₂O₅ aus der N₂O₄-Phase übrigbleibende N₂O₄-Abstrom in den Anolytstrom der elektrochemischen Zelle rückgeführt wird.

17. Vorrichtung nach Anspruch 16, wobei mindestens ein Teil des N₂O₄-Abstroms zum Einspritzen in den abgetrennten Teil des Anolytstroms rückgeführt wird.

18. Vorrichtung nach einem der Ansprüche 14 bis 17, wobei die abgetrennte HNO₃-Lösungsmittelphase in den Anolytstrom der elektrochemischen Zelle rückgeführt wird.

## Revendications

1. Procédé de production d'une solution de N₂O₅ dans un solvant organique, comprenant les étapes suivantes :
la circulation de courants d'anolyte et de catholyte de N₂O₄ dans HNO₃ dans des compartiments respectifs d'anode et de cathode (10, 20) d'une cellule électrochimique (2) avec application d'une différence de potentiel entre une anode et une cathode correspondantes, si bien qu'un courant électrique circule dans la cellule et N₂O₅ se forme électrochimiquement dans le compartiment de l'anode, caractérisé par les étapes suivantes :
la division d'une portion (31) du courant d'anolyte et, par l'une au moins de deux étapes de refroidissement ou d'addition au courant de N₂O₄ avec mélange poussé, la séparation de la partie divisée pour la production d'une première phase de solvant N₂O₄ contenant N₂O₅ et d'une seconde phase de solvant HNO₃ contenant aussi N₂O₅,
la séparation des deux phases dans un séparateur (31), et
la récupération de N₂O₅ de la première phase de N₂O₄ dans un solvant organique pour la production d'une solution de N₂O₅ dans un tel solvant, et
dans lequel la concentration de N₂O₄ dans le courant d'anolyte est maintenue à au moins 20 % en poids.

2. Procédé selon la revendication 1, dans lequel, après addition de N₂O₄ à la portion divisée, cette portion est refroidie à une température comprise entre -5 et +15 °C.

3. Procédé selon la revendication 1 ou 2, dans lequel la concentration de N₂O₄ dans le courant d'anolyte est maintenue à au moins 30 % en poids.

4. Procédé selon l'une quelconque des revendications 1 à 3, dans lequel la concentration de N₂O₅ dans le courant d'anolyte est maintenue à au moins 15 % en poids.

5. Procédé selon la revendication 4, dans lequel la concentration est maintenue à au moins 20 % en poids.

6. Procédé selon l'une quelconque des revendications précédentes, dans lequel la température du courant d'anolyte sortant de la cellule électrochimique est maintenue dans la plage allant de 0 à 30 °C.

7. Procédé selon l'une quelconque des revendications précédentes, dans lequel la portion du courant d'anolyte qui est divisée est une petite portion.

8. Procédé selon la revendication 7, dans lequel la petite portion forme 1 à 20 % en poids du courant d'anolyte.

9. Procédé selon la revendication 8, dans lequel la petite portion forme environ 5 % du poids du courant d'anolyte.

10. Procédé selon l'une quelconque des revendications précédentes, dans lequel le produit N₂O₅ est récupéré de la première phase de N₂O₄ par refroidissement de la phase de N₂O₄ qui provoque une cristallisation soit en vrac soit sur une surface froide (41), puis par séparation respective par filtration de la matière solide ou par égouttage de la phase liquide de la surface, avant redissolution de N₂O₅ solide dans un solvant organique.

11. Procédé selon l'une quelconque des revendications 1 à 9, dans lequel le produit N₂O₅ est récupéré depuis la première phase de N₂O₄ par application d'une pression réduite à la phase de N₂O₄ afin que le solvant N₂O₄ soit séparé par distillation, et par redissolution de N₂O₅ produit dans un solvant organique.

12. Procédé selon l'une quelconque des revendications 1 à 9, dans lequel le produit N₂O₅ est récupéré à partir de la première phase de N₂O₄ par transmission de la phase de N₂O₄ directement dans un solvant organique, et l'application au mélange d'une distillation fractionnée à pression réduite pour l'extraction de N₂O₄ volatil quittant une solution de N₂O₅ dans le solvant organique.

13. Procédé selon l'une quelconque des revendications précédentes, dans lequel le solvant organique est le dichlorométhane ou l'acétonitrile.

14. Appareil (1) destiné à être utilisé dans un procédé de production d'une solution de N₂O₅ dans un solvant organique, l'appareil comprenant :
une cellule électrochimique (2) formant des compartiments respectifs d'anode et de cathode (10, 20) ayant une anode et une cathode respectivement, les compartiments permettant la circulation d'un premier courant d'anolyte et d'un second courant de catholyte de N₂O₄ dans NHO₃, la cellule ayant en outre un dispositif d'application d'une différence de potentiel entre l'anode et la cathode afin que, pendant l'utilisation, un circuit électrique circule dans la cellule et N₂O₅ se forme électrochimiquement dans le compartiment de l'anode, caractérisé en ce que l'appareil comporte en outre :
un dispositif destiné à diviser une portion (31) du courant d'anolyte, et un dispositif (33) destiné à refroidir la portion divisée pour la production d'une première phase d'un solvant N₂O₄ contenant N₂O₅ et d'une seconde phase d'un solvant HNO₃,
un séparateur (34) destiné à séparer les deux phases, et
un dispositif de récupération de N₂O₅ de la première phase de N₂O₄ dans un solvant organique pour la production d'une solution de N₂O₅ dans ce solvant.

15. Appareil selon la revendication 14, comprenant en outre un dispositif (32) d'injection d'un courant de N₂O₄ dans la portion divisée du courant d'anolyte avant le refroidissement de cette portion.

16. Appareil selon la revendication 14 ou 15, dans lequel N₂O₄ effluent restant après la récupération de N₂O₅ de la phase de N₂O₄ est recyclé vers le courant d'anolyte de la cellule électrochimique.

17. Appareil selon la revendication 16, dans lequel une partie au moins de l'effluent de N₂O₄ est recyclée pour être injectée dans la portion divisée du courant d'anolyte.

18. Appareil selon l'une quelconque des revendications 14 à 17, dans lequel la phase séparée de solvant HNO₃ est renvoyée au courant d'anolyte de la cellule électrochimique.
